# EUROPEAN PATENT APPLICATION

(11) **EP 4 722 129 A1**
(43) Date of publication of application: **08.04.2026**
(21) Application number: 24815897.4
(22) Date of filing: 31.05.2024
(51) Int. Cl.: B65F 1/14, B65F 1/08, G06Q 50/10, G06Q 10/30

(54) **WASTE CLOTHING COLLECTOR**

(30) Priority: 02.06.2023 KR 20230071275
(71) Applicant: Jeong, Hey Wook, Seoul 06307 (KR)
(72) Inventor: Jeong, Hey Wook, Seoul 06307 (KR)
(74) Representative: Algemeen Octrooi- en Merkenbureau B.V.
(86) International application number: PCT/KR2024/007445
(87) International publication number: WO 2024/248523

(57) **Abstract**

The present application relates to a waste clothing collector and a waste clothing collection method using the waste clothing collector. According to the waste clothing collector and the waste clothing collection method using the waste clothing collector, of the present application, a resource circulation system for high value-added recycling of waste clothing can be constructed, waste problems in fashion and fibre industries can be alleviated, and a circular economy, carbon neutrality, ESG management practices, and compensation for users are possible.

## Description

### Technical Field

The present application relates to a waste clothing collector and a waste clothing collection method using the waste clothing collector.

### Background Art

The fashion or textile industry is identified as a major contributor to environmental pollution, ranking third in greenhouse gas emissions and second in water resource pollution. The fossil fuel-centric raw material production and linear economy-based fashion industry model are causing enormous environmental burdens. While eco-friendly fashion, such as products made from recycled PET bottles, is gaining popularity in the fashion industry, there is a limit to resource circularity because there is no additional recycling of finished products after the primary recycling of waste resources.

In particular, as of 2021, South Korea generated 118,386 tons of waste clothing annually, exported 95% of collected waste clothing, and ranked fifth in the world in waste clothing exports, and accordingly, there is a need for an appropriate recycling system for the waste clothing produced domestically. In addition, the Ministry of Environment commissioned a research project to review the extended producer responsibility (EPR) system in December 2022, proposed to review the feasibility of applying the producer responsibility recycling system to recyclable resources such as waste clothing or waste textiles, and reported that resource circulation is essential in the fashion or textile industry in the future.

With the recent surge in interest in waste recycling and ESG management, domestic fashion raw material companies and chemical companies have been competitively developing technologies to recycle waste textiles, but currently, compared to the development of downstream (waste resources → recycled raw materials → finished products) technologies for domestic waste clothing or textile recycling, upstream (discard and collection) technologies are mainly comprised of reuse, labour-intensive physical upcycling, or pre-consumer recycling at the product production stage, and there is a problem that actual recycling effect of waste clothing is minimal. Single-material and simple blend fashion products, which account for a high proportion of everyday clothing, have high recycling value, and accordingly, when separate discard and collection thereof are performed, the single-material and simple blend fashion products may be reused as fashion raw materials of the same material group through physical or chemical recycling methods.

Therefore, in order to solve the problem, there is a need for a waste clothing collector that induces separate discard for each material at a waste clothing generation stage, collects waste clothing for each material, and then delivers the waste clothing to a recycling stage such that the recycling value chain of the waste clothing or textiles is connected to a single stream, and may ultimately activate post-consumer recycle of the waste clothing by a final consumer of clothing.

### Disclosure of Invention

### Technical Problem

An objective of the present application is to provide a waste clothing collector that may establish a resource circulation system for high-value recycling of waste clothing, solve waste problems in the fashion and textile industry, and implement circular economy, carbon neutrality, ESG management, and compensation for users, and a waste clothing collection method using the waste clothing collector.

### Solution to Problem

In order to solve the problem, a waste clothing collector of the present application includes an identification unit configured to recognize and read identification information attached to waste clothing discarded by a user to identify material information of the waste clothing; an inlet configured to be open when identified material information meets a pre-input condition; a weight measurement unit configured to measure a weight of the waste clothing with the identified material information; a plurality of collection bins configured to separately accommodate multiple pieces of waste clothing with identified material information and weight information for purpose of physical recycling or chemical recycling; and a cash-back amount calculation unit configured to calculate a cash-back amount based on a material and the weight of the waste clothing and pay calculated cash-back amount to the user.

Also, the identification unit may input information of the user before the user recognizes the identification information attached to the waste clothing.

Also, the identification information attached to the waste clothing may be a barcode, a QR code, a text, an RFID chip, or a textile material.

Also, the identification unit may read the barcode, the QR code, the text, the RFID chip, or the textile material by using a reader and then display the material information of the waste clothing.

Also, after the identification information attached to the waste clothing is photographed and transmitted by a mobile terminal of the user discarding the waste clothing, the identification unit reads a received image and displays the material information of the waste clothing.

Also, the identification unit displays the material information of the waste clothing after the identification information attached to the waste clothing is photographed, read, and then transmitted thereto by a mobile terminal of the user discarding the waste clothing.

Also, the pre-input condition may be whether the waste clothing includes one or more selected from cotton, wool, polyester, and nylon.

Also, each of the plurality of collection bins may accommodate waste clothing that meets the pre-input condition for each material.

Also, collection bins separated for purpose of the physical recycling may include collection bins that meet the pre-input condition and respectively accommodate waste clothing having a relatively high cotton content and waste clothing having a relatively high wool content.

Also, collection bins separated for purpose of the chemical recycling may include collection bins that meet the pre-input condition and respectively accommodate waste clothing having a relatively high polyester content and waste clothing having a relatively high nylon content.

Also, the cash-back amount may be either points accumulated in information of the user or cash transferred to a financial account of the user.

Also, a waste clothing collection method includes a material information identification step of recognizing and reading, by an identification unit, identification information attached to waste clothing discarded by a user and identifying material information of the waste clothing; an inlet opening step of opening an inlet when identified material information meets a pre-input condition; a weight measurement step of measuring, by a weight measurement unit, a weight of the waste clothing with the identified material information; a waste clothing collection step of separating multiple pieces of waste clothing with identified material information and weight information for purpose of physical recycling or chemical recycling and respectively accommodating separated multiple pieces of waste clothing in a plurality of collection bins; and a cash-back amount calculation step of calculating, by a cash-back amount calculation unit, a cash-back amount based on a material and the weight of the waste clothing and paying a calculated cash-back amount to the user.

Also, the waste clothing collection method may further include a user information input step of inputting information of the user to a user information input unit before the user recognizes the identification information attached to the waste clothing.

### Advantageous Effects of Invention

According to a waste clothing collector of the present application and a waste clothing collection method thereof using the waste clothing collector, a resource circulation system for high-value recycling of waste clothing may be established, waste problems in the fashion and textile industry may be solved, and circular economy, carbon neutrality, ESG management, and compensation for users may be implemented.

### Brief Description of Drawings

FIG. 1 is a front view illustrating an exterior of a waste clothing collector according to one embodiment of the present application.
FIG. 2 is a front view illustrating an interior of a waste clothing collector according to one embodiment of the present application.
FIG. 3 is a schematic diagram illustrating circular economy of the present application.
FIG. 4 is an example flowchart illustrating a waste clothing collection method according to one embodiment of the present application.
FIG. 5 is an example flowchart illustrating a waste clothing collection method according to another embodiment of the present application.

### Best Mode for Carrying out the Invention

Hereinafter, a waste clothing collector of the present application will be described with reference to the attached drawings, the attached drawings are examples, and the waste clothing collector of the present application is not limited to the attached drawings.

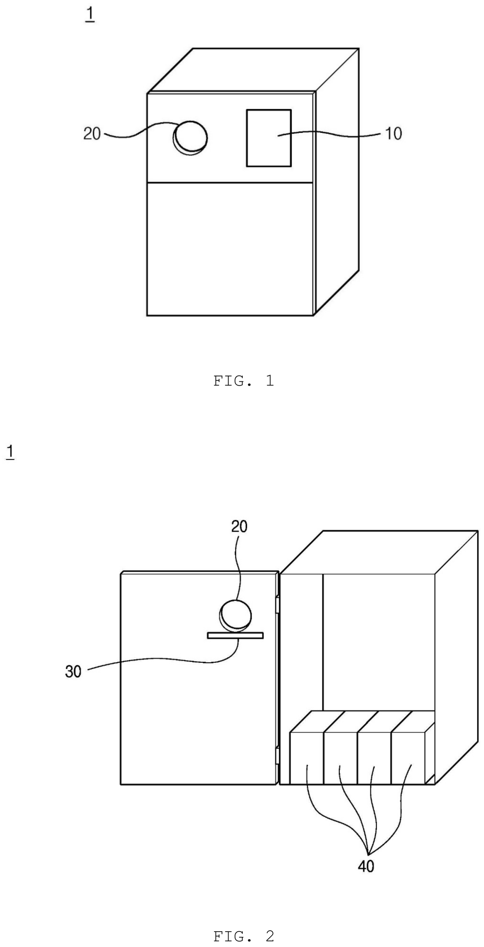

FIG. 1 is a front view illustrating an exterior of a waste clothing collector according to one embodiment of the present application. FIG. 2 is a front view illustrating an interior of the waste clothing collector according to one embodiment of the present application. As illustrated in FIGS. 1 and 2, a waste clothing collector 1 includes an identification unit 10, an inlet 20, a weight measurement unit 30, a collection bin 40, and a cash-back amount calculation unit (not illustrated). According to the waste clothing collector of the present application may establish a resource circulation system for high-value recycling of waste clothing, solve waste management problems in the fashion and textile industry, and may implement circular economy, carbon neutrality, and ESG management, and compensation for users.

The identification unit 10 recognizes and reads identification information attached to waste clothing discarded by a user to identify material information of the waste clothing and may be provided on an exterior of the waste clothing collector 1. For example, the identification unit 10 may be a display device. By reading the identification information attached to the waste clothing through the identification unit 10 and identifying the material information of the waste clothing, the waste clothing may be classified for each material before the waste clothing is discarded to the waste clothing collector.

The identification information attached to the waste clothing, specifically identification information, which is attached to a care label of the waste clothing, may be a barcode, a QR code, a text, an RFID (Radio Frequency Identification) chip, or a textile material. The barcode is attached to a care label of the waste clothing and is a one-dimensional code obtained by combining black and white bar symbols indicating letters or numbers. Also, the QR code is attached to a care label of the waste clothing and is a two-dimensional code with a grid pattern which may include significantly more types of information than the barcode. The text represents clothing material information listed on a care label attached to the waste clothing. Also, the RFID chip is attached to waste clothing and is a semiconductor chip that may cause the data stored in the RFID chip to be read through radio frequency in a non-contact manner when an RFID reader reaches a recognizable distance. Also, the textile material represents the material information of the waste clothing itself. That is, when material identification of waste clothing is limited to the identification information attached to a care label, the material of the waste clothing may serve as the identification information. The identification unit 10 may identify material information of the waste clothing by recognizing the identification information attached to waste clothing discarded by a user.

In one example, the identification unit 10 may recognize and read the barcode, QR code, text, RFID chip, or textile material described above through a reader, and then display the material information of the waste clothing. For example, a reader that recognizes a barcode may be a barcode reader that emits light onto the barcode printed on a care label of waste clothing and reads an electronic signal generated based on intensity of the reflected light. Also, a reader that recognizes a QR code may be a QR code reader that emits light onto the QR code printed on a care label of waste clothing and reads an electronic signal generated based on intensity of the reflected light. In this case, the QR code reader may recognize a barcode. Also, a reader that recognizes an RFID chip may be an RFID reader that transmits and receives radio waves to and from the RFID chip embedded in a care label of waste clothing. Also, a reader that recognizes a textile material may be a material scanner that analyses a material of waste clothing through LED reflectivity. The reader (not illustrated) may be attached to any part of the exterior of the waste clothing collector 1 or may be separated therefrom.

**In** another example, after identification information attached to the waste clothing is photographed by a mobile terminal of a user discarding the waste clothing and an image obtained by photographing the identification information is transmitted, the identification unit 10 may read the transmitted image to display material information of the waste clothing. That is, the identification unit 10 may receive an image obtained by taking a picture of identification information, such as a barcode, a QR code, a text, an RFID chip, or a textile material by using a user's mobile terminal, and perform a function of reading and displaying the identification information included in the received image.

In another example, after the identification information attached to the waste clothing is photographed by a mobile terminal of a user discarding the waste clothing, read, and transmitted, the identification unit 10 may display material information of the waste clothing. That is, the identification unit 10 may receive a result of reading an image obtained by photographing identification information, such as a barcode, a QR code, a text, an RFID chip, or a textile material, using a user's mobile terminal, and perform a function of displaying a received result that is a material information of the waste clothing.

Also, the identification unit 10 may further include inputting information of a user that discards the waste clothing before the user recognizes identification information attached to the waste clothing. By inputting a user's information through the identification unit 10, the user's identity may be identified, and the cash-back amount for waste clothing may be paid to the user. In this case, the identification unit 10 may be a touch-sensitive display device.

The inlet 20 is open when material information identified by the identification unit 10 meets a pre-input condition, such that waste clothing for which identifying of the material information is completed may be input. In this case, opening of the inlet 20 may be controlled by a separate control unit.

The pre-input condition may be whether waste clothing includes one or more selected from cotton, wool, polyester, and nylon. Specifically, when material information of waste clothing discarded by a user includes one or more selected from cotton, wool, polyester, and nylon, the inlet 20 may be open. In contrast to this, when material information of waste clothing discarded by a user does not include one or more selected from cotton, wool, polyester, and nylon, the inlet 20 may not be open.

The weight measurement unit 30 measures a weight of waste clothing with the identified material information and may be provided inside the waste clothing collector 1. For example, when the inlet 20 is open, waste clothing with the identified material information is input to the waste clothing collector 1, the input waste clothing is moved onto the weight measurement unit 30 provided inside the waste clothing collector 1, and then a weight of the waste clothing may be measured. Through this, a cash-back amount may be calculated by a cash-back amount calculation unit based on the measured weight.

The collection bin 40 includes a plurality of collection bins 40 that separately accommodates multiple pieces of waste clothing of which material information and weight information are identified by the identification unit according to the respective purposes of physical recycling or chemical recycling and is provided inside the waste clothing collector 1. For example, when the weight measurement unit 30 completes measuring a weight of the waste clothing with the identified material information, the inlet 20 is closed, and the multiple pieces of waste clothing with the identified material information may be separated from each other according to the respective purposes of physical recycling or chemical recycling and accommodated respectively in the plurality of collection bins 40. In the present specification, the term "plurality" means two or more, and an upper limit is not limited in particular. For example, an upper limit of the collection bin 40 may be adjusted depending on the number of desired materials.

In one example, the respective collection bins 40 may accommodate multiple pieces of waste clothing that respectively meet pre-input conditions for each material. For example, among cotton, wool, polyester, and nylon, waste clothing with the highest cotton content may be accommodated in a cotton collection bin, waste clothing with the highest wool content may be accommodated in a wool collection bin, waste clothing with the highest polyester content may be accommodated in a polyester collection bin, and waste clothing with the highest nylon content may be accommodated in a nylon collection bin.

Also, the collection bins separated for the purpose of physical recycling may include a collection bin accommodating waste clothing that meets pre-input conditions and has a relatively high cotton content, and a collection bin accommodating wool waste clothing. Specifically, the collection bins separated for the purpose of physical recycling may include a cotton collection bin and a wool collection bin, each of which accommodates the respective pieces of waste clothing described above.

Also, the collection bins separated for the purpose of chemical recycling may include a collection bin accommodating waste clothing that meets pre-input conditions and has a relatively high polyester content, and a collection bin accommodating nylon waste clothing. Specifically, the collection bins separated for the purpose of chemical recycling may include a polyester collection bin and a nylon collection bin, each of which accommodates the respective pieces of waste clothing described above.

When multiple pieces of waste clothing are accommodated in the collection bins, the multiple pieces of waste clothing are separated from each other for each material for the purpose of physical recycling or chemical recycling, and accordingly, a waste clothing collection company may selectively collect the necessary waste clothing without separate sorting work and sell the collected waste clothing at a price appropriate to the waste resource value of each material. Due to this, a resource circulation system for high-value recycling of waste clothing may be established, waste problems in the fashion and textile industry may be solved, and circular economy, carbon neutrality, ESG management, and compensation for users may be implemented.

Also, the cash-back amount calculation unit calculates cash-back amounts depending on materials of waste clothing, pays the calculated cash-back amounts to users who discard multiple pieces of waste clothing, and is included in the identification unit 10. For example, cash-back amounts may be set differently depending on materials and weights of waste clothing and paid to users. By calculating and paying a cash-back amount to a user who discards waste clothing according to the method described above, compensation for the waste clothing may be provided to the user.

For example, the cash-back amount may be points accumulated based on a user's information or cash transferred to the user's financial account. Specifically, the cash-back amount may be points assigned to a user's information input to the user information input unit described above, or cash transferred to the user's financial account input to the user information input unit described above. Through this, a user may receive compensation for waste clothing.

That is, in order to implement circular economy, carbon neutrality, and ESG management, multiple pieces of waste clothing discarded by users may be collected separately for the purpose of physical recycling or chemical recycling, and accordingly, circular economy-type fashion products may be produced. Furthermore, by paying a cash-back amount for the collected waste clothing depending on materials and/or weights, the circular economy-type fashion products may be consumed.

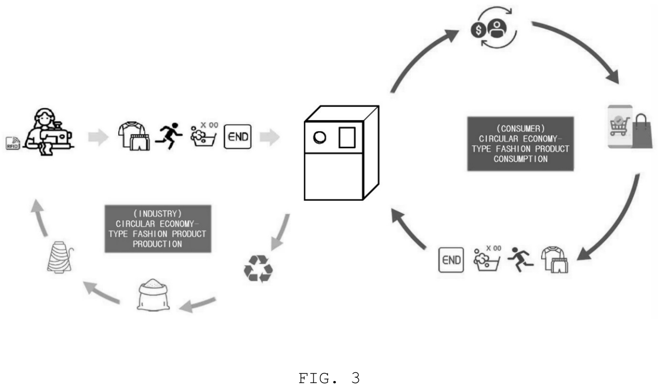

FIG. 3 is a schematic diagram illustrating circular economy of the present application. As illustrated in FIG. 3, in producing circular economy-type fashion products, multiple pieces of waste clothing discarded by users are first weighed by the waste clothing collector described above and then accommodated separately for the purpose of physical recycling or chemical recycling. Subsequently, a partner company removes auxiliary materials from the multiple pieces of waste clothing accommodated in the waste clothing collector, and either physical recycling or chemical recycling is performed for the multiple pieces of waste clothing. Thereafter, the respective pieces of waste clothing that are physically recycled or chemically recycled are produced as recycled raw materials. Thereafter, the recycled raw materials are reproduced as fashion materials. Thereafter, clothing products are made of the recycled fashion materials. Thereafter, customers purchase the produced clothing and repeat wear and wash, and when use of the clothing is completed, the clothing becomes waste clothing. By repeating a process of discarding the waste clothing into the waste clothing collector, circular economy-type fashion products may be produced.

Also, as illustrated in FIG. 3, in a case where the circular economy-type fashion products are consumed, cash-back amount appropriate to a material and/or weight of the waste clothing is paid to a user through the waste clothing collector. Thereafter, a user purchases a clothing product by using the cash-back amount received online or offline. Thereafter, the purchased clothing becomes waste clothing once a user repeatedly wears and washes the clothing. Thereafter, by repeating a process of discarding the waste clothing into the waste clothing collector, circular economy-type fashion products may be consumed.

The present application also relates to a waste clothing collection method. The waste clothing collection method relates to a waste clothing collection method using the waste clothing collector described above, and because details of the waste clothing collection method to be described below are performed in the same manner as the description given above on the waste clothing collector, the details of the waste clothing collection method are omitted.

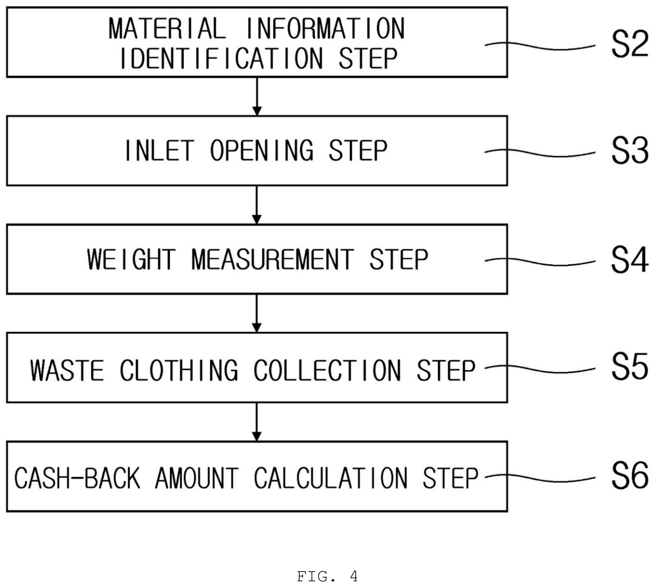

FIG. 4 is an example flowchart illustrating a waste clothing collection method according to one embodiment of the present application. As illustrated in FIG. 4, the waste clothing collection method of the present application includes a material information identification step S2, an inlet opening step S3, a weight measurement step S4, a waste clothing collection step S5, and a cash-back amount calculation step S6. According to the waste clothing collection method of the present application, a resource circulation system for high-value recycling of waste clothing may be established, waste problems in the fashion and textile industries may be solved, and a circular economy, carbon neutrality, ESG management, and compensation for users may be implemented.

The material information identification step S2 is a step of recognizing and reading identification information attached to waste clothing discarded by a user to identify material information of the waste clothing and is performed by the identification unit described above. Detailed description of the material information identification step is identical to the description given above on the identification unit, and accordingly, the detailed description is omitted.

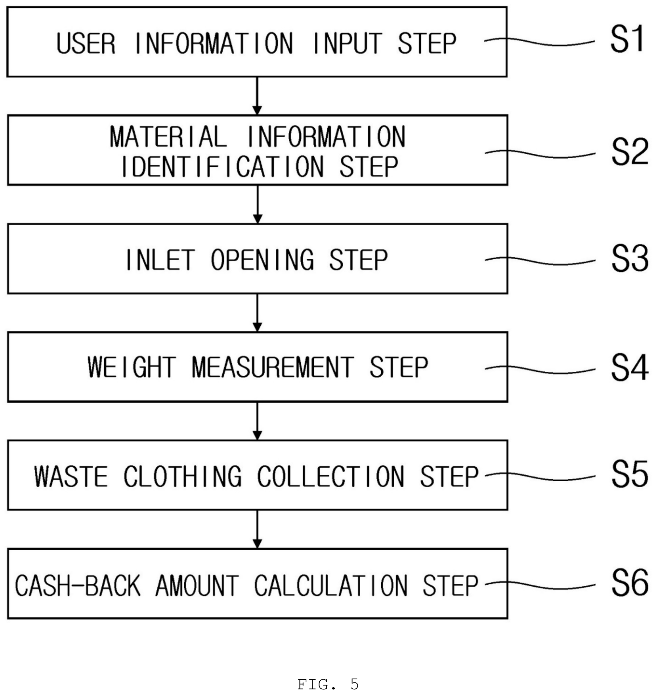

FIG. 5 is an example flowchart illustrating a waste clothing collection method according to another embodiment of the present application. As illustrated in FIG. 5, the waste clothing collection method may further include a user information input step S1. The user information input step S1 is a step of inputting information of a user that discards waste clothing before the user recognizes identification information attached to the waste clothing, which may be performed by the user information input unit. Detailed description of the user information input step is identical to the description given above on the user information input unit, and accordingly, the detailed description is omitted.

The inlet opening step S3 is a step of opening an inlet when the material information identified by the identification unit meets pre-input conditions. Detailed description of the inlet opening step is identical to the description given above on the inlet, and accordingly, the detailed description is omitted.

The weight measurement step S4 is a step of measuring a weight of waste clothing with the identified material information by the weight measurement unit. Detailed description of the weight measurement step is identical to the description given above on the weight measurement unit, and accordingly, the detailed description is omitted.

The waste clothing collection step S5 is a step of separating multiple pieces of waste clothing with the identified material information and weight information by the identification unit for the purpose of physical recycling or chemical recycling and accommodating the separated multiple pieces of waste clothing respectively in a plurality of collection bins. Detailed description of the waste clothing collection step is identical to the description given above on the collection bin, and accordingly, the detailed description is omitted.

The cash-back amount calculation step S6 is a step of calculating, by the cash-back amount calculation unit, cash-back amounts depending on materials and weights of multiple pieces of waste clothing and paying the calculated cash-back amounts to users who discard the multiple pieces of waste clothing. Detailed description of the cash-back amount calculation step is identical to the description given above on the cash-back amount calculation unit, and accordingly, the detailed description is omitted.

### Sequence List Text

1: waste clothing collector
10: identification unit
20: inlet
30: weight measurement unit
40: collection bin
S1: user information input step
S2: material information identification step
S3: inlet opening step
S4: weight measurement step
S5: waste clothing collection step
S6: cash-back amount calculation step

## Claims

1. A waste clothing collector comprising:
an identification unit configured to recognize and read identification information attached to waste clothing discarded by a user to identify material information of the waste clothing;
an inlet configured to be open when identified material information meets a pre-input condition;
a weight measurement unit configured to measure a weight of the waste clothing with the identified material information;
a plurality of collection bins configured to separately accommodate multiple pieces of waste clothing with identified material information and weight information for purpose of physical recycling or chemical recycling; and
a cash-back amount calculation unit configured to calculate a cash-back amount based on a material and the weight of the waste clothing and pay calculated cash-back amount to the user.

2. The waste clothing collector of claim 1, wherein the identification unit inputs information of the user before the user recognizes the identification information attached to the waste clothing.

3. The waste clothing collector of claim 1, wherein the identification information attached to the waste clothing is a barcode, a QR code, a text, an RFID chip, or a textile material.

4. The waste clothing collector of claim 3, wherein the identification unit reads the barcode, the QR code, the text, the RFID chip, or the textile material by using a reader and then displays the material information of the waste clothing.

5. The waste clothing collector of claim 1, wherein after the identification information attached to the waste clothing is photographed and transmitted by a mobile terminal of the user discarding the waste clothing, the identification unit reads a received image and displays the material information of the waste clothing.

6. The waste clothing collector of claim 1, wherein the identification unit displays the material information of the waste clothing after the identification information attached to the waste clothing is photographed, read, and then transmitted thereto by a mobile terminal of the user discarding the waste clothing.

7. The waste clothing collector of claim 1, wherein the pre-input condition is whether the waste clothing includes one or more selected from cotton, wool, polyester, and nylon.

8. The waste clothing collector of claim 1, wherein each of the plurality of collection bins accommodates waste clothing that meets the pre-input condition for each material.

9. The waste clothing collector of claim 1, wherein collection bins separated for purpose of the physical recycling include collection bins that meet the pre-input condition and respectively accommodate waste clothing having a relatively high cotton content and waste clothing having a relatively high wool content.

10. The waste clothing collector of claim 1, wherein collection bins separated for purpose of the chemical recycling include collection bins that meet the pre-input condition and respectively accommodate waste clothing having a relatively high polyester content and waste clothing having a relatively high nylon content.

11. The waste clothing collector of claim 2, wherein the cash-back amount is either points accumulated in information of the user or cash transferred to a financial account of the user.

12. A waste clothing collection method comprising:
a material information identification step of recognizing and reading, by an identification unit, identification information attached to waste clothing discarded by a user and identifying material information of the waste clothing;
an inlet opening step of opening an inlet when identified material information meets a pre-input condition;
a weight measurement step of measuring, by a weight measurement unit, a weight of the waste clothing with the identified material information;
a waste clothing collection step of separating multiple pieces of waste clothing with identified material information and weight information for purpose of physical recycling or chemical recycling and respectively accommodating separated multiple pieces of waste clothing in a plurality of collection bins; and
a cash-back amount calculation step of calculating, by a cash-back amount calculation unit, a cash-back amount based on a material and the weight of the waste clothing and paying a calculated cash-back amount to the user.

13. The waste clothing collection method of claim 12, further comprising:
a user information input step of inputting information of the user to a user information input unit before the user recognizes the identification information attached to the waste clothing.
